# EUROPÄISCHE PATENTSCHRIFT

(11) **EP 3 513 259 B1**
(45) Veröffentlichungstag und Bekanntmachung des Hinweises auf die Patenterteilung: **24.02.2021**
(21) Anmeldenummer: 17790937.1
(22) Anmeldetag: 11.09.2017
(51) Int. Cl.: G05B 19/409, B25J 9/16, G05B 19/042, B25J 13/06, B29C 45/76

(54) **STEUERVORRICHTUNG UND STEUERVERFAHREN FÜR INDUSTRIELLE MASCHINEN MIT GESTEUERTEN BEWEGUNGSANTRIEBEN**
CONTROL DEVICE AND CONTROL METHOD FOR INDUSTRIAL MACHINES WITH CONTROLLED MOTION DRIVES
DISPOSITIF DE COMMANDE ET PROCÉDÉ DE COMMANDE DE MACHINES INDUSTRIELLES COMPORTANT DES MÉCANISMES DE DÉPLACEMENT COMMANDÉS

(30) Priorität: 14.09.2016 AT 508222016
(43) Veröffentlichungstag der Anmeldung: 24.07.2019
(73) Patentinhaber: KEBA AG, 4041 Linz (AT)
(72) Erfinder: MAIER, Emanuel, 4600 Schleißheim (AT)
(74) Vertreter: Burger, Hannes
(86) Internationale Anmeldenummer: PCT/AT2017/060223
(87) Internationale Veröffentlichungsnummer: WO 2018/049448

(56) Entgegenhaltungen:
- DE-A1- 19 504 663
- DE-T2- 60 126 855
- DE-T2- 69 807 853
- JP-A- 2002 049 413
- JP-A- 2007 152 541
- US-A- 4 510 427
- US-A1- 2008 234 855
- US-A1- 2009 261 990

## Beschreibung

Die Erfindung betrifft eine Steuervorrichtung für industrielle Maschinen mit gesteuerten Bewegungsantrieben für Maschinenkomponenten, insbesondere für gesteuert bewegbare Maschinenachsen, sowie ein Verfahren zum Betreiben einer elektronischen Steuervorrichtung für industrielle Maschinen mit gesteuerten Bewegungsantrieben, wie dies in den Ansprüchen 1 und 12 angegeben ist.

Aus der EP 1 403 619 B1 ist ein elektronisches Bediensystem bekannt, welches als Teil eines Fahrerinformationssystems in Kraftfahrzeugen vorgesehen ist. Zudem soll dieses Bediensystem als Anzeige- und Bedienvorrichtung in Zusammenhang mit der Steuerung von Maschinen, zum Beispiel in der industriellen Fertigung, genutzt werden können. Dieses Bediensystem umfasst eine elektronische Steuereinheit, welche über eine Recheneinheit verfügt, eine Anzeigeeinheit, welche zur Visualisierung grafischer Darstellungen geeignet ist, und eine Bedieneinheit, mit welcher manuelle Eingriffe bezüglich der Funktionalitäten des jeweiligen Systems vorgenommen werden können. Zur Veränderung von Parametern des Systems ist dabei vorgesehen, dass eine Anzeigemarke in Art eines Cursors über die Anzeigefläche der Anzeigeeinheit bewegt wird und dadurch eine zur Verfügung stehende Funktion angewählt wird. Nach entsprechender Anwahl der gewünschten Funktion durch cursorartige Verschiebung der Anzeigemarke wird ein weiteres Bedienelement betätigt, um damit Parameter verändern zu können. Dieses zweite Bedienelement ermöglicht beispielsweise eine Veränderung von Parameterwerten in Verbindung mit der zuvor über ein erstes Bedienelement ausgewählten Funktion. Die in dieser Druckschrift beschriebenen Maßnahmen sind für die Steuerung bzw. Beeinflussung von Maschinen mit Bewegungsantrieben nur bedingt geeignet. Die beschriebenen Maßnahmen eignen sich vielmehr für eine Anwendung in Verbindung mit relativ unkritischen Funktionalitäten, wie sie in Fahrerinformationssystemen von Kraftfahrzeugen vorkommen. Eine Bedienung von industriellen Maschinen mit Bewegungsantrieben wäre mit dieser vorbekannten Ausführung nur bedingt zufriedenstellend.

Die EP 1 075 979 B1 beschreibt ein Verfahren zum Betreiben einer Multifunktionsbedieneinrichtung, welche ebenso in Verbindung mit Kraftfahrzeugen vorteilhaft einsetzbar ist. Bei dieser Multifunktionsbedieneinrichtung werden Menüs und/oder Bedienfunktionen auf einer Anzeigeeinheit dargestellt und die besagten Menüs und/oder Funktionen über Tastelemente und zumindest ein Drehbetätigungselement betätigt. Zumindest eines dieser Drehbetätigungselemente ist dabei hinsichtlich seiner Drehrichtungen und Drehstellungen und/oder Raststellungen und/oder Betätigungsanschläge frei programmierbar. Diese freie Programmierung erfolgt dabei derart, dass haptische Rückmeldungen im Drehbetätigungsweg erzeugt werden, die den jeweils abgerufenen Menüs oder Funktionen zugeordnet sind. Jeder Betätigungsfunktion ist dabei ein Satz haptischer Daten zugeordnet, die dynamisch an eine Funktionsdatenänderung angepasst werden. Damit ist eine intuitive Bedienung ermöglicht, nachdem der Bedienperson haptische Rückmeldungen gegeben werden, die in Abhängigkeit der jeweiligen Menüs bzw. Funktionen automatisch angepasst werden. Eine Bedienung von industriellen Maschinen mit Bewegungsantrieben ist mit der angegebenen Vorrichtung jedoch nur bedingt praktikabel.

Die US 4 510 427 A beschreibt eine Maschinensteuerung für eine Werkzeugmaschine mit der Möglichkeit zur manuellen Vorgabe der Werkzeug- oder Vorschubgeschwindigkeit. Diese Maschinensteuerung umfasst einen manuell bedienbaren, endlos verdrehbaren Impulsgenerator (MOPG), welcher wahlweise direkt auf die Servoantriebe der Maschine steuerungstechnisch einwirkt und deren Antriebsrichtung und Geschwindigkeit beeinflusst, oder auf wenigstens ein Zählerregister einwirken kann. In Abhängigkeit der Verdrehrichtung des Impulsgenerators kann dabei ein Zählerstand des wenigstens einen Zählerregisters erhöht oder verringert werden. Die jeweils voreingestellten Zählerstände sind sodann ein vordefinierter Multiplikator für die in einem manuellen Betriebsmodus erzeugten Impulse des Impulsgenerators. Damit kann eine umfangreiche Einstellung von Antriebs- bzw. Vorschubgeschwindigkeiten vorgenommen werden, ohne dass eine Vielzahl von Schaltelementen und Leitungsverbindungen erforderlich ist.

Die DE 698 07 853 T2 beschreibt eine CNC-Maschine deren Bedienpult eine Mehrzahl von Eingabetasten, einen Bildschirm und ein multifunktionales Handrad umfasst, welches zur Erzeugung von Steuerimpulsen ausgebildet ist. Das Handrad kann einerseits dazu verwendet werden, um die Vorschubgeschwindigkeiten bzw. Antriebsdrehzahlen einzustellen, und anderseits zum schrittweisen Ausführen eines vordefinierten CNC-Ablaufprogramms genutzt werden. Hierzu sind diverse Schaltkombinationen mit weiteren Eingabetasten vorgesehen, um die jeweilige Funktion aktivieren zu können. Durch Anwendung von vordefinierten, speziellen Schneidpfaden soll die Eckenausbildung von herzstellenden Werkstücken verbessert werden.

Die US 2008/0234855 A1 beschreibt ein Handbediengerät für Werkzeugmaschinen, welches ein Display, mehrere diskret aufgebaute Eingabetasten und ein Drehsteller-Betätigungselement mit zumindest zwei turmförmig aufgebauten, koaxial zueinander angeordneten Betätigungsorganen umfasst. Den jeweiligen Betätigungsorganen sind dabei Federmechanismen zugeordnet, mit welchen eine selbsttätige Rückstellung in jeweils fix vordefinierte Neutralstellungen ermöglicht werden soll.

Die JP 2007-152541 A beschreibt ein Handbediengerät mit einem Display, einer Mehrzahl von Eingabetasten und einem Drehsteller-Bedienelement zur manuellen Steuerung eines Industrieroboters. Die Drehachse des Drehsteller-Bedienelementes ist mit einem Servomotor gekoppelt, welcher Servomotor in Abhängigkeit von Zuständen des Industrieroboters angesteuert bzw. aktiviert wird. Dadurch ist eine Erzeugung eines haptischen Feedbacks basierend auf den Zuständen des gesteuerten Roboters in Richtung zum Handbediengerät möglich. Insbesondere werden dabei am Industrieroboter vorherrschende Geschwindigkeiten, Beschleunigungen, Drehmomente, Vibrationen, oder auch räumliche Positionen des Industrieroboters durch den Servomotor im Handbediengerät für die Bedienperson taktil wahrnehmbar gemacht.

Die DE 195 04 663 A1 beschreibt einen Mikromanipulator zum dreidimensionalen Betätigen eines feinen Instruments im Sichtfeld eines Mikroskops. Ein Joystick dient dazu, die Manipulatoren in jeder axialen Richtung zu bewegen, sodass eine genaue Positionierung des feinen Instrumentes möglich ist, welches am Mikromanipulator befestigt ist. Wenn ein Druckknopf am Handhabungshebel des Joystick nicht gedrückt wird, bedeutet das die Vorgabe einer Positionssteuerung. Wenn die Handhabung des Mikromanipulators über eine Geschwindigkeitssteuerung erfolgen soll, dann wird dieser Druckknopfschalter am Handhabungshebel gedrückt. Der Handhabungshebel des Joystick kann zusätzlich oder als Alternative zu einem Reibungssystem mit einer Rückstellungszentrierfeder versehen sein, um die Position des Handhabungshebels beizubehalten.

Die JP 2002-49413 A beschreibt ein Bedienpanel für eine Drehmaschine, für eine sonstige numerisch gesteuerte Maschine, oder für einen Industrieroboter. Diese Bedienpanel umfasst einen manuell verdrehbaren Impulsgenerator mit einem drehknopfartigen Betätigungselement, wobei die elektrischen Impulse des Impulsgenerators zur Beeinflussung der Maschinensteuerung herangezogen werden. Ein Bewegungsachsen-Wählschalter ist dabei als Mehrfachkontakt-Wahlschalter ausgeführt und in die äußere Oberfläche des Betätigungselements für den manuell verdrehbaren Impulsgenerator integriert.

Die US 2009/261990 A1 beschreibt einen manuell zu betätigenden Impulsgenerator als Eingabemittel für numerische Steuerungen. Dieser Impulsgenerator umfasst eine Bedienoberfläche mit einem berührungssensitiven Sensor. Dieser Sensor ist dazu ausgebildet, in Abhängigkeit der jeweiligen Berührungsposition ein entsprechendes Sensorsignal bereitzustellen. Ein elektronische Auswertungsvorrichtung verarbeitet die jeweiligen Sensorsignale und stellt sie zur Ansteuerung eines Motors bereit. Durch links- oder rechtsdrehende, spiralförmig verlaufende Berührungsbahnen kann dabei die Antriebsgeschwindigkeit in Bezug auf Drehrichtungen eines Motors nach links und rechts beeinflusst werden.

Die DE 601 26 855 T2 beschreibt eine Steuervorrichtung für Industrieroboter, welche zum Einstellen der Arbeitsposition und -geschwindigkeit eines Roboterarms in mehreren Arbeitskoordinaten dient. Die Steuervorrichtung umfasst mehrere Bedientasten, die einer Arbeitskoordinate oder mehreren Arbeitskoordinaten des Roboterarms zugewiesen sind. Die Steuervorrichtung umfasst einen kombinierten Tipp-Drehschalter, der derart ausgebildet ist, dass er entweder gedrückt oder gezogen und gedreht werden kann. Wenn dabei dieser Tipp-Drehschalter in einem Zustand gedreht wird, in dem der Tipp-Drehschalter weder gedrückt noch gezogen ist, wird die Position des Roboterarms durch die Drehung des Tipp-Drehschalters gesteuert. Wenn hingegen der Tipp-Drehschalter in einem Zustand gedreht wird, in dem der Tipp-Drehschalter entweder gedrückt oder gezogen ist, so wird die Arbeitsgeschwindigkeit des Roboterarms durch die Drehung des Tipp-Drehschalters gesteuert. Auch eine hierzu inverse Zuordnung der Funktionalitäten und Wechselwirkungen zwischen dem Tipp-Drehschalter und der Arbeitsposition bzw. Arbeitsgeschwindigkeit eines angesteuerten Roboterarms ist möglich.

Der Tipp-Drehschalter kann auch ein Ansprech-Einstellelement aufweisen. Mit diesem Ansprech-Einstellelement kann das Bedienungsgefühl bei der Manipulation für den Komfort des Bedieners verbessert werden.

Aufgabe der vorliegenden Erfindung war es, die Nachteile des Standes der Technik zu überwinden und eine Vorrichtung und ein Verfahren zur Verfügung zu stellen, mittels derer ein Benutzer in der Lage ist, eine möglichst praktikable Bedienung von industriellen Maschinen mit Bewegungsantrieben vorzunehmen.

Insbesondere liegt eine Aufgabe der vorliegenden Erfindung darin, die Bedien- bzw. Programmierbarkeit von Maschinen mit gesteuert verfahrbaren Komponenten bzw. aktiv verstellbaren Maschinenachsen zu verbessern.

Diese Aufgabenstellung wird durch eine Vorrichtung und ein Verfahren gemäß den Ansprüchen gelöst.

Demnach ist eine Steuervorrichtung für industrielle Maschinen mit gesteuerten Bewegungsantrieben für Maschinenkomponenten vorgesehen, welche Steuervorrichtung zumindest eine Mensch-Maschine-Schnittstelle, insbesondere steuerungstechnische Ein- und Ausgabemittel, umfasst. Dabei ist wenigstens ein Bedienelement zur manuellen Beeinflussung oder Vorgabe von Verstellbewegungen von zumindest einer der Maschinenkomponenten, beispielsweise in Art von gesteuert verstellbaren Maschinenachsen, ausgeführt. Die entsprechende Steuervorrichtung zeichnet sich dadurch aus, dass zumindest ein Bedienelement als Drehsteller-Bedienelement mit einem endlos rotierbaren, insbesondere anschlaglos verdrehbaren Betätigungsorgan ausgeführt ist, und dass dieses Drehsteller-Bedienelement mit wenigstens einem Tastschaltelement in funktionaler Wechselwirkung steht. Das Drehsteller-Bedienelement und das Tastschaltelement sind mit einer elektronischen Auswerte- und Steuervorrichtung verbunden, welche zumindest zur Bereitstellung eines ersten und eines zweiten steuerungstechnischen Einsatz- bzw. Interaktionsmodus eingerichtet ist. Der erste Interaktionsmodus ist dabei zur Vorgabe einer von einer Bedienperson gewünschten Bewegungsgeschwindigkeit und gewünschten Bewegungsrichtung einer anzusteuernden Maschinenkomponente vorgesehen, in welchem ersten Interaktionsmodus das Tastschaltelement zu betätigen oder zu aktivieren ist und gleichzeitig das Betätigungsorgan des Drehsteller-Bedienelementes um einen der gewünschten Bewegungsgeschwindigkeit entsprechenden Drehwinkel in die jeweilige Drehrichtung zu verstellen ist, wobei durch das Ausmaß des Drehwinkels die Bewegungsgeschwindigkeit und durch die Verdrehrichtung die Bewegungsrichtung einer anzusteuernden Maschinenkomponente definiert sind. Im zweiten Interaktionsmodus ist eine Drehbetätigung des Betätigungsorganes des Drehsteller-Bedienelementes ohne gleichzeitiger Betätigung des Tastschaltelementes vorgesehen, wobei anstatt einer Vorgabe einer Bewegungsgeschwindigkeit eine Positionsänderung einer anzusteuernden Maschinenkomponente proportional zum Ausmaß der Drehbetätigung, insbesondere in Abhängigkeit des zurückgelegten Drehwinkels, erfolgt.

Zudem steht das Betätigungsorgan mit einem gesteuert veränderlichen Drehwiderstand-Generierungsmittel in mechanischer Wechselwirkung.

Ferner ist das Drehwiderstand-Generierungsmittel von der Auswerte- und Steuervorrichtung derart ansteuerbar, dass beim Erreichen einer letztmaligen Ruhestellung des Betätigungsorganes infolge einer Rückdrehung des Betätigungsorganes durch eine Bedienperson, eine Verdrehbarkeit des Betätigungsorganes über diese letztmalige Ruhestellung hinaus für eine vordefinierte Zeitspanne, oder während dem Einwirken eines Betätigungsmomentes gegenüber dem Betätigungsorgan, blockiert oder gehemmt wird, sodass einer Bedienperson das Erreichen der letztmaligen Ruhestellung des Betätigungsorgans haptisch signalisiert ist.

Durch die angegebenen Maßnahmen ist eine verbesserte manuelle Bedienung bzw. Kontrolle von Bewegungsantrieben bzw. von damit bewegten Maschinenkomponenten ermöglicht. Insbesondere ist dadurch für eine Bedienperson eine Bedienungssystematik geschaffen, welche eine rasch verständliche bzw. eine intuitive manuelle Bedienung von verfahrbaren Maschenkomponenten, insbesondere von sogenannten Maschinenachsen, ermöglicht. Die entsprechenden Bedienhandlungen können dabei relativ komfortabel und zugleich fehlervermeidend ausgeführt werden. Durch die eindeutigen Bedienhandlungen bzw. durch die damit einhergehende bewusste Abgabe von Bewegungs-Steuerbefehlen kann das Beschädigungsrisiko gegenüber einer gesteuerten Maschine minimiert und die Personensicherheit gesteigert werden Insbesondere kann die von manuell angesteuerten Maschinen ausgehende Gefahr reduziert werden, nachdem unbeabsichtigte bzw. ungewollte Steuerbefehle vermieden bzw. hintangehalten werden können. Durch den einfachen Moduswechsel kann zudem eine besonders rasche und auch exakte Umsetzung von gewünschten Maschinenbewegungen erreicht werden, wodurch eine hohe Nutzungsakzeptanz bzw. Wirtschaftlichkeit erzielt werden kann.

Diese vorteilhaften Wirkungen werden unter anderem dadurch erreicht, dass das Betätigungsorgan zur Abgabe von Bewegungs-Steuerbefehlen als Drehsteller-Bedienelement ausgeführt ist, bei welchem eine endlose Rotierbarkeit des Betätigungsorganes zur Verfügung steht. Zur benutzerseitigen bzw. manuellen Initiierung einer Bewegung einer Maschinenkomponente bzw. einer Maschinenachse ist einerseits ein erster Interaktionsmodus verfügbar, in welchem der absolute Drehwinkel des Betätigungsorganes die Bewegungsgeschwindigkeit und die Bewegungsrichtung der Maschinenkomponente bestimmt. Zur Einnahme dieses ersten Interaktionsmodus ist dabei gleichzeitig das Tastschaltelement in einfacher Art und Weise zu betätigen bzw. zu aktivieren. Ausgehend von einer Start- bzw. Ausgangsposition des Betätigungsorganes, welche Start- bzw. Ausgangsposition vordefiniert sein kann oder durch die letztgültige Ruhestellung des Betätigungsorgans definiert sein kann, wird dann die jeweilige Bewegungsgeschwindigkeit der Maschinenkomponente abgeleitet. In diesem ersten Interaktionsmodus ist keine kontinuierliche Rotation des Betätigungsorganes notwendig, sondern wird die Maschinenachse in Abhängigkeit vom jeweiligen Drehwinkel des Betätigungsorganes und in Abhängigkeit von der dabei eingeschlagenen Drehrichtung angesteuert bzw. bewegt. Dadurch können auch länger andauernde Bewegungen von Maschinenkomponenten bequem ausgeführt werden, nachdem keine andauernde Rotation des Betätigungsorganes erforderlich ist.

Der zweite zur Verfügung stehende Interaktionsmodus liegt in einfacher Art und Weise dann vor, wenn das Tastschaltelement unbetätigt bleibt bzw. nicht aktiviert ist. In diesem zweiten Interaktionsmodus besteht für die Bedienperson die Möglichkeit die Bewegung der anzusteuernden Maschinenachse gewissermaßen dosieren bzw. fein justieren zu können, um End- bzw. Zielpositionen rasch und exakt erreichen bzw. einnehmen zu können. In diesem zweiten Interaktionsmodus, in welchem keine Betätigung des Tastschaltelementes erfolgt, wird also eine zeitliche Änderung des Drehwinkels des Betätigungsorganes in eine Bewegung der Maschinenkomponente umgesetzt. Das heißt, dass in diesem zweiten Interaktionsmodus eine Verfahrbewegung der anzusteuernden Maschinenachse nur solange auftritt, solange eine Rotationsbewegung des Betätigungsorganes vorliegt. Dies ist für feinfühlige Positionieraufgaben einer anzusteuernden Maschinenkomponente besonders vorteilhaft.

Um zwischen den beiden Betriebsmodi, insbesondere zwischen dem ersten Interaktionsmodus und dem zweiten Interaktionsmodus rasch und problemlos wechseln bzw. umschalten zu können, ist der Einsatz eines Tastschaltelementes besonders zweckmäßig.

Zweckmäßig ist auch, dass ausgehend von der Steuervorrichtung in Richtung zur Bedienperson ein Feedback-Kanal aufgebaut ist, welcher die Benutzerfreundlichkeit des Steuerungssystems bzw. der Maschinensteuerung wesentlich erhöhen kann. Insbesondere kann dadurch eine verbesserte Interaktion zwischen der Bedienperson und der anzusteuernden Maschine erreicht werden und ist zudem eine relativ sichere, fehlervermeidende und zugleich rasche Bedienhandlung erzielbar. Durch die Implementierung einer haptischen Signalisierung bzw. durch Ausnutzung des taktilen Wahrnehmungsvermögens einer Bedienperson können die jeweiligen Bewegungsabläufe bzw. Bewegungs-Steuerbefehle geordnet und relativ prozesssicher initiiert werden.

Durch die angegebenen steuerungstechnischen Maßnahmen ist auch ein ungewolltes "Überdrehen" des Betätigungsorganes im Zuge der Rückdrehung des Betätigungsorganes hintangehalten. Insbesondere kann durch die gesteuerte Erzeugung eines Sperr- bzw. Hemmwiderstandes via das Drehwiderstand-Generierungsmittels erreicht werden, dass auch bei einer relativ schnellen Rückdrehbewegung des Betätigungsorganes in den neutralen Bereich bzw. in seine letztmalige Ruhe- bzw. Ausgangsposition, ein Überfahren der Ausgangsposition bzw. Neutralstellung nicht auftritt. Ein sehr schnelles Zurückbewegen des Betätigungsorganes durch die Bedienperson birgt grundsätzlich die Gefahr, dass das Betätigungsorgan in die Gegenrichtung ausgelenkt wird und somit ungewollt eine Bewegung der Maschinenkomponente in die entgegen gesetzte Richtung initiiert wird. Dem kann durch die Maßnahmen gemäß Anspruch 1 in einfacher und effektiver Art und Weise entgegengewirkt werden. Die entsprechende Steuervorrichtung kann somit intuitiv, fehlervermeidend und rasch bzw. mühelos bedient werden. Durch die variable Steuerbarkeit des Drehwiderstand-Generierungsmittels kann dabei die Ausgangsposition des Betätigungsorganes jeweils fix vordefiniert sein, aber auch in Abhängigkeit von der zuletzt vorliegenden Ruhe- bzw. Ausgangsposition des Betätigungsorganes abhängig gemacht werden.

Von Vorteil sind auch die Maßnahmen gemäß Anspruch 2, da dadurch ein intuitives Bedienkonzept vorliegt, welches ein Auftreten von Bedienfehlern bzw. stressbehafteten Situationen für eine Bedienperson vermeidet bzw. hintan hält. Insbesondere kann dadurch eine ursprünglich initiierte und aktuell laufende Maschinen- bzw. Achsbewegung jederzeit sehr schnell und einfach gestoppt werden. Wird nämlich das Tastschaltelement im Zuge des Vorliegens des ersten Interaktionsmodus von der Bedienperson losgelassen, stoppt die entsprechende Maschinenbewegung bzw. die Achsbewegung der Maschinenkomponente vorzugsweise unabhängig vom aktuellen Drehwinkel des Betätigungsorganes. Damit lassen sich rasche Anhaltungen bzw. Stopps vornehmen, ohne dass von der Bedienperson spezielle Handlungen zu berücksichtigen sind. Durch einfaches Deaktivieren des Tastschaltelementes liegt ein Steuerbefehl für die Einleitung eines Stillstandes der angesteuerten Maschinenkomponente vor, welcher Steuerbefehl von der Steuervorrichtung unmittelbar oder möglichst unmittelbar umgesetzt werden kann.

Vorteilhaft sind aber auch die Maßnahmen gemäß Anspruch 3, da dadurch eine gesteuerte Abnahme der Bewegungsgeschwindigkeit einer Maschinenkomponente bzw. Maschinenachse bis zu deren Stillstand von einer Bedienperson einfach und intuitiv eingeleitet bzw. ausgeführt werden kann. Insbesondere kann dadurch eine sanfte Stillsetzung erfolgen bzw. kann ein in Bezug auf die Verzögerung justierbarer Bremsvorgang einer zu bewegenden Maschinenkomponente durch eine Bedienperson einfach und intuitiv ausgeführt bzw. vorgegeben werden. Ferner können dadurch Spitzenbelastungen der mechanischen Komponenten der Maschine vermieden werden und ist insgesamt eine feinfühlige, manuelle Bedienung bzw. Steuerung der jeweiligen Maschinenkomponenten bzw. Maschinenachsen erzielbar.

Praktikables Feedback kann durch die Maßnahmen gemäß Anspruch 4 erzielt werden. Insbesondere wird dadurch erreicht, dass bei größer werdendem Drehwinkel des Betätigungsorganes und einer damit einhergehenden höheren Bewegungsgeschwindigkeit der Maschinenkomponente, zugleich ein höherer Drehbetätigungswiderstand für die Bedienperson vorliegt, welchen Drehwiderstand die Bedienperson für eine weitere Steigerung der Bewegungsgeschwindigkeit bewusst überwinden muss. Dadurch wird quasi ein "Übersteuern" bzw. ein allzu rasches Hochfahren bzw. ein allzu schnelles Bewegen der Maschinenkomponente hintangehalten. Das ist insbesondere dann von besonderem Nutzen, wenn die Bewegungsrichtung der Maschinenkomponente parallel oder im Wesentlichen parallel zur Blickrichtung der Bedienperson gerichtet ist, da in diesen Fällen eine Einschätzung der tatsächlichen Bewegungsgeschwindigkeit für die Bedienperson vergleichsweise schwierig ist. Ein solches "Übersteuern" konnte für eine Bedienperson bisher also auch unbewusst eintreten. Durch die angegebenen Maßnahmen kann dieser Problematik effektiv und zuverlässig abgeholfen werden.

Vorteilhaft ist auch eine Ausführung gemäß Anspruch 5, da dadurch die dem Tastschalterelement zugeordnete Funktion für eine Bedienperson unmissverständlich dargelegt werden kann. Insbesondere können dadurch ungewollte Bedienhandlungen seitens der Bedienperson hintangehalten werden, nachdem das Tastschaltelement als baulich eigenständiges, bedarfsweise zu betätigendes Element erscheint. Dies ist insbesondere dann gegeben, wenn durch die separate Platzierung des Tastschaltelementes eine Zweihand-Bedienung erforderlich ist, bei welcher mit einer Hand das Tastschaltelement zu aktivieren ist und mit der weiteren Hand der Bedienperson das Betätigungsorgan des Drehsteller-Bedienelementes zu betätigen ist.

Zweckmäßig sind auch die Maßnahmen gemäß Anspruch 6, da dadurch eine integrale Baueinheit geschaffen ist, in welcher die Funktionalitäten des Drehsteller-Bedienelementes und des Tastschalterelementes in einer Baueinheit zusammengefasst sind.

Von Vorteil ist aber auch die Ausführungsform gemäß Anspruch 7, da dadurch eine EinhandBedienung ermöglicht ist, bei welcher das Drehsteller-Bedienelement mit einer Hand verdrehbar ist und zugleich das Tastschaltelement mit der gleichen Hand der Bedienperson bzw. mit den Fingern der gleichen Hand bedarfsweise aktivier- und deaktivierbar ist.

Zweckmäßig sind auch die Maßnahmen gemäß Anspruch 8. Dabei ist das Tastschaltelement außermittig am verdrehbaren Betätigungsorgan positioniert und wird somit analog zur Verdrehung des Betätigungsorgans mitbewegt. Durch die außermittige bzw. exzentrische Anordnung kann für die Bedienperson eine einfachere Orientierung in Bezug auf die jeweilige Drehstellung des Betätigungsorgans erzielt werden. Beispielsweise kann dadurch eine typische Ausgangs- bzw. Ruhelage des Betätigungsorgans ersichtlich gemacht werden. Zudem ist dadurch eine ergonomische Bedienung mit nur einem Finger möglich, da beispielsweise das Tastschaltelement mit einem Finger, insbesondere dem Zeigefinger, betätigt werden kann und zugleich eine Dreh- bzw. Rotationsbewegung des Betätigungsorganes ausgeführt werden kann. Dies kann einerseits mit dem selben Finger, oder mit den anderen Fingern der Hand der Bedienperson erfolgen. Zweckmäßig ist es dabei, wenn die Betätigungsfläche des Tastschalelementes gegenüber der Oberfläche des Betätigungsorganes vertieft ausgebildet ist.

Zweckmäßig sind auch die Maßnahmen gemäß Anspruch 9, da dadurch eine Art "Huke-Pack"-Ausführung gegeben ist, welche eine intuitive Dreh- und Drückbetätigung des Drehsteller-Bedienelementes ermöglicht. Auch dadurch kann besonders einfach und intuitiv zwischen den beiden Interaktionsmodi gewechselt bzw. umgeschaltet werden und ist lediglich eine Hand der Bedienperson erforderlich, um die jeweiligen Bedienhandlungen ausführen zu können.

Zweckmäßig ist auch eine Ausführungsform nach Anspruch 10 und/oder 11, da dadurch eine sensorische Erkennung des Auslassens bzw. Loslassens des Betätigungsorgans durch eine Bedienperson erreicht werden kann. Eine solche "Loslass-Erkennung" kann in einfacher Art und Weise implementiert werden, insbesondere dem Drehsteller-Bedienelement zugeordnet werden. Dabei stehen eine Vielzahl von physikalischen Wirkprinzipien zur Verfügung, um automatisiert erkennen bzw. unterscheiden zu können, ob die Finger einer Bedienperson am Betätigungsorgan anliegen bzw. dieses ergreifen, oder ob das Betätigungsorgan an gewissen vordefinierten Positionen ergriffen bzw. betätigt wird. Dadurch kann in zuverlässiger Art und Weise eine sensorbasierende Umschaltung zwischen den beiden Interaktionsmodi umgesetzt werden und zugleich eine intuitive Bedienhandlung für die Bedienperson bereitgestellt werden.

Die Aufgabe der Erfindung wird weiters durch das anspruchsgemäße Verfahren zum Betreiben einer elektronischen Steuervorrichtung für industrielle Maschinen gelöst. Die damit erzielbaren vorteilhaften Wirkungen und technischen Effekte sind den vorstehenden Ausführungen und den nachfolgenden Beschreibungsteilen zu entnehmen.

Zum besseren Verständnis der Erfindung wird diese anhand der nachfolgenden Figuren näher erläutert.

Es zeigen jeweils in stark vereinfachter, schematischer Darstellung:
- Fig. 1: eine aus mehreren Maschinen, insbesondere Industrierobotern, gebildete technische Anlage und ein dabei eingesetztes, elektronisches Steuerungssystem, welches Steuerungssystem mehrere Steuervorrichtungen und eine Mensch-Maschine-Schnittstelle in Art eines tragbaren Handbediengerätes umfasst;
- Fig. 2: eine Produktionsmaschine, insbesondere eine Spritzgießmaschine, welche eine elektronische Steuervorrichtung und eine daran angebundene Mensch-Maschine-Schnittstelle in Art eines stationären Bedienpanels umfasst;
- Fig. 3: das Bedienpanel der Produktionsmaschine nach Fig. 2;
- Fig. 4: eine Steuervorrichtung für industrielle Maschinen mit einem Drehsteller-Bedien-element, welches zur Bedienung oder Beeinflussung von Bewegungsantrieben dient und zudem ein Tastschaltelement zur bedarfsweisen, benutzerinitiierten Umschaltung zwischen zumindest zwei Interaktionsmodi umfasst;
- Fig. 5: eine Ausführungsform eines Drehsteller-Bedienelementes in Kombination mit einem elektromechanischen Tastschaltelement;
- Fig. 6: eine weitere Ausführungsform eines Drehsteller-Bedienelementes in Kombination mit einem sensorischen Tastschaltelement.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

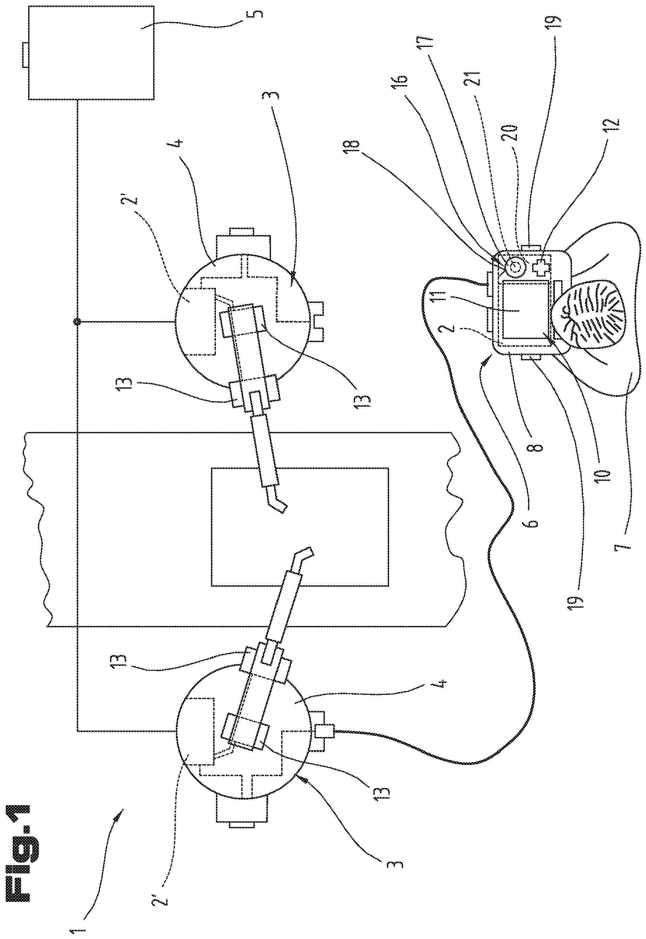

In den Fig. 1 bis 3 sind Ausführungsbeispiele von elektrotechnischen bzw. elektronischen Steuerungssystemen 1 gezeigt, die für die Automatisierung bzw. Steuerung von industriellen Anlagen eingesetzt werden können. Eine solche industrielle Anlage bzw. dessen Steuerungssystem 1 umfasst wenigstens eine elektronische Steuervorrichtung 2, 2' bzw. kann auch eine Mehrzahl von verteilt angeordneten elektronischen Steuervorrichtungen 2, 2' vorgesehen sein. Eine entsprechende Anlage umfasst zumindest eine Maschine 3 bzw. eine Mehrzahl von gegebenenfalls interagierenden Maschinen 3 bzw. Maschinenkomponenten. Die zumindest eine elektronische Steuervorrichtung 2, 2' ist vorzugsweise softwaregesteuert ausgeführt und dient primär dazu, die jeweiligen Steuerungsfunktionen der jeweiligen industriellen Maschine 3 umzusetzen bzw. die Abläufe der Maschine 3 überwachen, beeinflussen und/oder programmieren zu können.

Entsprechend der Ausführung nach Fig. 1 ist eine solche industrielle Maschine 3 durch wenigstens einen Industrieroboter 4 gebildet. Ein solcher Industrieroboter 4 kann Bestandteil einer Montage- bzw. Fertigungsanlage sein. Durch eine datentechnische Vernetzung der jeweiligen Steuervorrichtungen 2, 2' kann vorgesehen sein, dass die Industrieroboter 4 steuerungstechnisch interagieren können. Eine solche daten- bzw. steuerungstechnische Vernetzung zwischen mehreren Industrierobotern 4 kann auch einen zentralen Leitrechner 5 umfassen. Hinsichtlich einer zentralen, dezentralen, hierarchischen oder anderweitig aufgebauten Steuerungsarchitektur und Vernetzung sind dabei vielfältigste Ausführungsformen denkbar, welche entsprechend den jeweiligen Erfordernissen gewählt werden können.

Zumindest einer Steuervorrichtung 2' in zumindest einer Maschine 3 ist dabei zumindest eine Mensch-Maschine-Schnittstelle 6 (HMI) zugeordnet bzw. zuordenbar. Mittels dieser Mensch-Maschine-Schnittstelle 6 sind steuerungsrelevante Interaktionen zwischen einer Bedienperson 7 und der jeweiligen Maschine 3 ermöglicht.

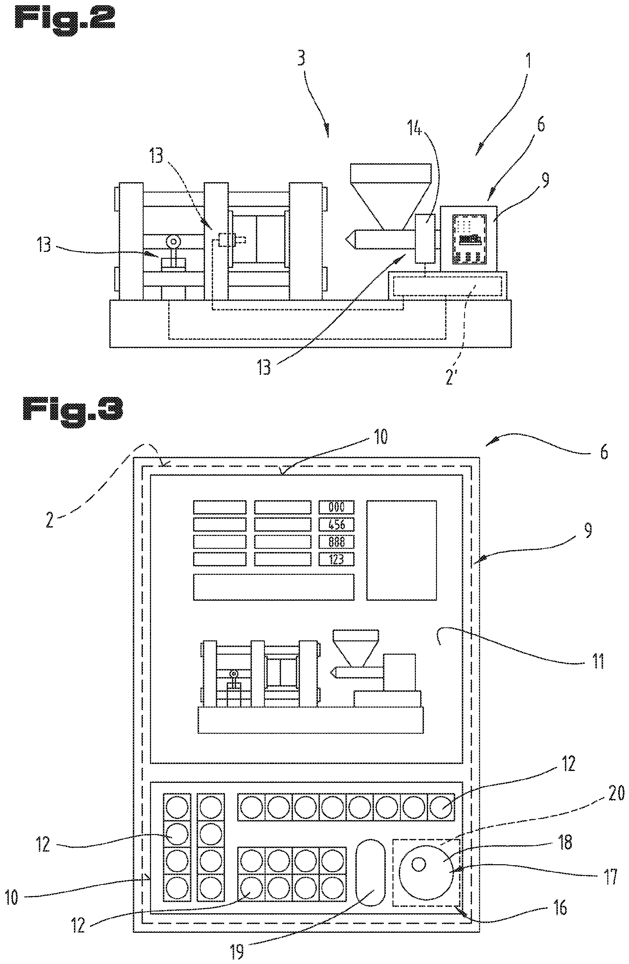

Beim Ausführungsbeispiel gemäß Fig. 1 ist die steuerungstechnische Mensch-Maschine-Schnittstelle 6 durch ein mobiles bzw. tragbares Handbediengerät 8 gebildet. Bei der Ausführungsform nach Fig. 2 ist die Mensch-Maschine-Schnittstelle 6 durch ein stationäres Bedienpanel 9 definiert. Die jeweiligen Mensch-Maschine-Schnittstellen 6 können somit auch als Bedienerschnittstellen bezeichnet werden.

Ein gattungsgemäßes Handbediengerät 8 bzw. Bedienpanel 9 weist wenigstens eine Eingabevorrichtung 10, wie zum Beispiel einen berührungssensitiven Bildschirm 11, Eingabetasten 12, Schalter, oder sonstige elektrische oder elektromechanische Eingabemittel auf. Zudem können visuell und/oder akustisch erfassbare Ausgabemittel vorgesehen sein. Bei einem gattungsgemäßen Handbediengerät 8 bzw. Bedienpanel 9 können insbesondere der zuvor erwähnte berührungssensitive Bildschirm 11, sowie Leuchtelemente bzw. Signalisierungslampen zur Anzeige von systemrelevanten Daten bzw. Zuständen vorgesehen sein. Der Funktionsumfang und die Ausführungsform der jeweiligen Eingabevorrichtung bzw. der jeweiligen Ausgabevorrichtung hängen dabei stark von der jeweiligen Anwendung, insbesondere von der technischen Komplexität der zu steuernden Maschine 3 bzw. Anlage ab. Wesentlich ist dabei, dass die Bedienperson 7 mittels der Eingabevorrichtung 10 und einer geeigneten Ausgabevorrichtung, insbesondere mittels dem zuvor genannten berührungssensitiven Bildschirm 11, die benötigten steuerungstechnischen Abläufe kontrollieren bzw. überwachen, beeinflussen und/oder programmieren kann.

Die in der Mensch-Maschine-Schnittstelle 6, insbesondere im Handbediengerät 8 bzw. im Bedienpanel 9 ausgeführte Steuervorrichtung 2 und die einer Maschine 3 zugeordnete Steuervorrichtung 2' können dabei über kabelgebundene und/oder drahtlos ausgeführte Kommunikationsschnittstellen in datentechnischer bzw. steuerungstechnischer Wechselwirkung stehen.

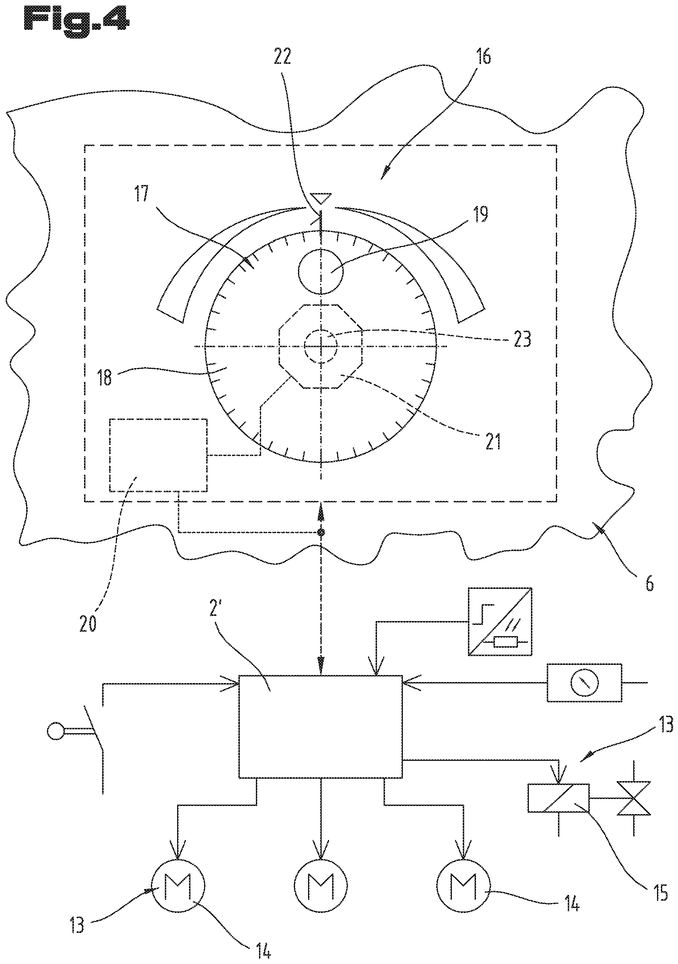

Wie an sich bekannt, sind zur Automatisierung der jeweiligen Maschinen 3 steuerbare, insbesondere wenigstens aktivier- und deaktivierbare Bewegungsantriebe 13 vorgesehen, welche mit der jeweiligen Steuervorrichtung 2' leitungsverbunden sind. Häufig sind solche Bewegungsantriebe 13 auch hinsichtlich ihrer Antriebsgeschwindigkeit und/oder Antriebsleistung bzw. Antriebskraft bedarfsabhängig einstell- bzw. veränderbar. Derartige Bewegungsantriebe 13 können, wie in Fig. 2 bzw. Fig. 4 veranschaulicht, durch Motoren 14, durch Hydraulikzylinder, durch Proportional-Magnetventile 15, oder durch sonstige Elemente zur aktiven bzw. steuerbaren Bewegung von Maschinenkomponenten gebildet sein. Unter den entsprechenden Bewegungsantrieben 13 sind auch Aktoren zu verstehen, mit welchen eine Verstellbewegung einer Maschinenkomponente erzeugt bzw. eingeleitet werden kann. Ein solcher Bewegungsantrieb 13 und die jeweilige Maschinenkomponente können dabei auch als Maschinenachse bezeichnet werden. Unter einer steuerbaren Maschinenkomponente bzw. Maschinenachse kann zum Bespiel ein Gelenksarm eines Industrieroboters 4, eine Vorschubeinheit, ein Bearbeitungsaggregat einer Werkzeugmaschine, ein Stellantrieb einer Produktionsmaschine, und dergleichen verstanden werden. An eine solche Maschinen-Steuervorrichtung 2' können typischerweise auch eine Mehrzahl von Sensoren, Endschalter und/oder Geber angeschlossen sein, wie dies allgemein bekannt ist und in Fig. 4 beispielhaft gezeigt ist. Dadurch können Bewegungs- bzw. Funktionsabläufe der jeweiligen Maschine vollautomatisch oder zumindest teilautomatisch ausgeführt werden bzw. automatisiert überwacht werden.

Zur manuellen Beeinflussung bzw. zur Programmierung der jeweiligen Bewegungsantriebe 13 bzw. Maschinenkomponenten ist an der jeweiligen Mensch-Maschine-Schnittstelle 6 zumindest ein Bedienelement 16 zur manuellen Beeinflussung oder Vorgabe von Verstellbewegungen von zumindest einer der Maschinenkomponenten bzw. Maschinenachsen vorgesehen. Diese manuelle Beeinflussung oder Vorgabe von Verstellbewegungen durch eine Bedienperson 7 umfasst vorzugsweise die Möglichkeit einer Geschwindigkeits- und/oder Leistungsver-änderung des anzusteuernden bzw. selektiv ansteuerbaren Bewegungsantriebes 13. Zudem können Bedienelemente, insbesondere Tast- oder Schaltelemente, ausgeführt sein, welche zur Aktivierung und Deaktivierung eines ausgewählten bzw. ansteuerbaren Bewegungsantriebes 13 vorgesehen sind.

Zumindest eines der Bedienelemente 16 an der Mensch-Maschine-Schnittstelle 6 ist dabei als Drehsteller-Bedienelement 17 mit einem endlos bzw. anschlaglos verdrehbaren Betätigungsorgan 18 ausgeführt. Endlose Verdrehbarkeit bedeutet dabei, dass das Drehsteller-Bedienelement 17 bzw. dessen Betätigungsorgan 18 derart ausgeführt ist, dass es keine mechanischen Endanschläge bzw. keine dauerhafte Begrenzung hinsichtlich der Drehbeweglichkeit des Betätigungsorganes 18 gibt. Dies im Unterschied zu einem typischen Potentiometer bzw. einstellbaren, ohmschen Widerstand, bei welchem ein Verdreh- bzw. Einstellbereich von üblicherweise etwa 270° gegeben ist. Das anspruchsgemäße Drehsteller-Bedienelement 17 ist vielmehr mit einem sogenannten Override-Potentiometer vergleichbar bzw. kann das Drehsteller-Bedienelement 17 als endlos drehbeweglicher Inkrementalgeber ausgeführt sein. Wesentlich ist, dass das Drehsteller-Bedienelement 17 eine endlose Rotierbarkeit seines beispielsweise scheiben- oder radförmigen Betätigungsorganes 18 bzw. eine damit einhergehende, unbegrenzte Abgabe von Sensorimpulsen bzw. Inkrementen ermöglicht.

Das Drehsteller-Bedienelement 17 am Handbediengerät 8 (Fig. 1) bzw. am Bedienpanel 9 (Fig. 3) steht dabei mit wenigstens einem Tastschaltelement 19 in funktionaler Wechselwirkung. Dieses hardwaremäßig ausgeführte und/oder softwaretechnisch implementierte Tastschaltelement 19 ist dabei vorzugsweise in Greifnähe zum Drehsteller-Bedienelement 17 positioniert. Beispielsweise kann eine softwaretechnische Implementierung in Art eines sogenannten "Softkey" erfolgen, wofür vorzugsweise der berührungssensitive Bildschirm 11 involviert sein kann. Insbesondere kann die Funktionalität des Tastschaltelementes 19 auch via den berührungssensitiven Bildschirm 11 bereitgestellt werden.

Bei der Ausführungsform gemäß Fig. 1 sind zwei Tastschaltelemente 19 vorgesehen, welche an ergonomisch gut ergreifbaren Positionen am Gehäuse des Handbediengerätes 8 ausgeführt sind. Entsprechend der Ausführungsform nach Fig. 3 ist das Tastschaltelement 19 unmittelbar neben dem Drehsteller-Bedienelement 17 angeordnet. Die Tastschaltelemente 19 gemäß den Fig. 1 und 3 sind hardwaremäßig ausgeführt und werden softwaretechnisch ausgewertet.

Das Drehsteller-Bedienelement 17 und das zumindest eine Tastschaltelement 19 sind mit einer elektronischen Auswerte- und Steuervorrichtung 20 verbunden. Insbesondere sind Signale bzw. Betätigungszustände des Tastschaltelementes 19 und des Drehsteller-Bedienelementes 17 durch die Auswerte- und Steuervorrichtung 20 erfass- und evaluierbar.

Die Auswerte- und Steuervorrichtung 20 kann dabei als eigenständige bzw. separate Einheit ausgeführt sein, oder aber durch die Steuervorrichtung 2, 2' umgesetzt werden. Insbesondere kann die Steuervorrichtung 2, 2' zumindest Teilaufgaben der Auswerte- und Steuervorrichtung 20 übernehmen. Dies vor allem deshalb, weil die Funktionalitäten der Auswerte- und Steuervorrichtung 20 überwiegend softwaretechnisch bzw. programmtechnisch realisierbar sind und daher in einfacher Art und Weise einen Funktionsumfang der Steuervorrichtung 2, 2' darstellen können. Es ist somit auch ein kombinatorisches Zusammenwirken möglich, um eine Umsetzung der Auswerte- und Steuervorrichtung 20 zu erzielen.

Die baulich eigenständig und/oder zumindest teilweise softwaretechnisch ausgeführte Auswerte- und Steuervorrichtung 20 ist zumindest zur Bereitstellung eines ersten und eines zweiten Einsatz- bzw. Interaktionsmodus M1, M2 eingerichtet. Diese beiden Verwendungs- bzw. Interaktionsmodi M1, M2 sind primär als softwaretechnisch umgesetzte Verhaltensweisen der Steuervorrichtung 2, 2' zu verstehen.

Erfindungsgemäß ist dabei der erste Interaktionsmodus M1 zur Vorgabe einer von einer Bedienperson 7 gewünschten Bewegungsgeschwindigkeit und gewünschten Bewegungsrichtung einer anzusteuernden Maschinenkomponente vorgesehen. In diesem ersten Interaktionsmodus M1 ist das Tastschaltelement 19 durch die Bedienperson 7 zu betätigen bzw. zu aktivieren und ist gleichzeitig, insbesondere zusätzlich, das Betätigungsorgan 18 des Drehsteller-Bedienelementes 17 um einen der gewünschten Bewegungsgeschwindigkeit entsprechenden Drehwinkel in die jeweilige Drehrichtung zu verstellen, um eine Bewegung einer anzusteuernden Maschinenkomponente zu bewirken. Durch das Ausmaß des Drehwinkels wird dabei die Bewegungsgeschwindigkeit und durch die Verdrehrichtung die Bewegungsrichtung einer anzusteuernden Maschinenkomponente definiert. So wird beispielsweise bei einer 25°-Verdrehung des Betätigungsorganes 18 eine langsamere Bewegungsgeschwindigkeit bewirkt, als bei einer Verdrehung des Betätigungsorganes 18 um einen Verdrehwinkel von 50°. Eine Linksdrehung des Betätigungsorganes 18 kann dabei eine Bewegung der Maschinenkomponente nach links bzw. hinten (oder unten), und eine Verdrehung des Betätigungsorganes 18 nach rechts beispielsweise eine Bewegung der Maschinenkomponente nach rechts bzw. nach vorne (oder nach oben) - oder umgekehrt - bewirken. In diesem ersten Interaktionsmodus M1 wird also in Abhängigkeit des Verdrehwinkels des Betätigungsorganes 18 die Bewegungsgeschwindigkeit und in Abhängigkeit der Verdrehrichtung die Bewegungsrichtung der angesteuerten bzw. anzusteuernden Maschinenkomponente bestimmt. Wesentlich ist dabei, dass zur Einnahme dieses ersten Interaktionsmodus M1 gleichzeitig bzw. simultan das entsprechend vorgesehene bzw. ausgebildete Tastschaltelement 19 zu betätigen bzw. zu aktivieren ist. Der erste Interaktionsmodus M1 ist dabei solange aktiv, solange das Tastschaltelement 19 durch die Bedienperson 7 betätigt bzw. aktiviert ist.

Demgegenüber erfolgt im zweiten Interaktionsmodus M2 eine Drehbetätigung des Betätigungsorganes 18 des Drehsteller-Bedienelementes 17 ohne einer gleichzeitigen Betätigung des Tastschaltelementes 19. Das heißt, dass der zweite Interaktionsmodus M2 dann vorliegt bzw. dann eingenommen wird, wenn das Tastschaltelement 19 nicht betätigt ist bzw. inaktiv ist. Anstatt einer Vorgabe einer Bewegungsgeschwindigkeit wie beim ersten Interaktionsmodus M1 ist dann im zweiten Interaktionsmodus M2 eine Positionsänderung einer anzusteuernden Maschinenkomponente proportional zum Ausmaß der Drehbetätigung, insbesondere proportional zum summarisch zurückgelegten Drehwinkel des Betätigungsorgans 18 vorgesehen bzw. von der Steuervorrichtung 2, 2' umzusetzen. Das heißt, dass die jeweilige Bewegung der Maschinenkomponente solange ausgeführt wird, solange eine Drehbetätigung des Betätigungsorgans 18 vorliegt bzw. von der Auswerte- und Steuervorrichtung 20 festgestellt wird.

Die Bewegungsgeschwindigkeit im Zuge des zweiten Interaktionsmodus M2 kann dabei einen fixen, vordefinierten Wert einnehmen, oder durch die Bedienperson 7 selektiv voreingestellt werden. Auch eine gewisse Variation der Bewegungsgeschwindigkeit der Maschinenachse in Abhängigkeit einer Variation der Drehgeschwindigkeit der fortlaufenden Drehbewegung des Betätigungsorgans 18 ist dabei denkbar. Wesentlich ist, dass im zweiten Interaktionsmodus M2 eine Bewegung der jeweiligen Maschinenkomponente nur vorliegt bzw. nur ausgeführt wird, solange das Betätigungsorgan 18 gedreht bzw. rotiert wird. Beim Loslassen bzw. Beenden der Drehbetätigung des Betätigungsorgans 18 erfolgt unmittelbar ein Stopp der angesteuerten Maschinenkomponente. In diesem zweiten Interaktionsmodus M2 kann vor allem eine genaue bzw. feine Positionierung einer Maschinenkomponente erzielt werden. Im zweiten Interaktionsmodus M2 erfolgt also eine Initiierung und Ausführung einer Bewegung der anzusteuernden Maschinenkomponente via eine kontinuierliche Rotation des Betätigungsorganes 18.

In Zusammenhang mit dem ersten Interaktionsmodus M1 kann entsprechend einem praktikablen Steuerungsablauf auch vorgesehen sein, dass infolge eines Loslassens oder einer Deaktivierung des Tastschaltelementes 19 während der Vorgabe einer Bewegungsgeschwindigkeit für die angesteuerte Maschinenkomponente eine Verfahrbewegung der anzusteuernden Maschinenkomponente unmittelbar oder möglichst zeitnah abgebrochen wird. Entsprechend dieser in der Auswerte- und Steuervorrichtung 20 implementierten Auswertungsroutine erfolgt also ein sofortiger Stopp der Bewegung der Maschinenkomponente, sobald das Tastschaltelement 19 von der Bedienperson 7 losgelassen wird. Dies entspricht gewissermaßen einer Beendigung bzw. einem Abbruch der Steuerungsfunktionalitäten des ersten Interaktionsmodus M1.

Der Steuerungsablauf kann aber auch derart erfolgen, dass im Zuge der Vorgabe einer Bewegungsgeschwindigkeit gemäß dem ersten Interaktionsmodus M1 und einer dabei von einer Bedienperson 7 vorgenommenen Drehbetätigung des Betätigungsorganes 18 zurück in die Ausgangsposition, insbesondere zurück in die ursprüngliche Ruhelage, die Bewegungsgeschwindigkeit der anzusteuernden Maschinenkomponente im Ausmaß der rückstellenden Drehbetätigung reduziert wird und schlussendlich die Verstellbewegung der anzusteuernden bzw. angesteuerten Maschinenkomponente beim Erreichen der Ausgangsposition, insbesondere beim Erreichen der ursprünglichen Ruhelage, gestoppt wird. Dies entspricht einer benutzerinitiierten Geschwindigkeitsreduzierung der Maschinenkomponente mit einer Verzögerung der Bewegungsgeschwindigkeit proportional zur Rückdrehbewegung des Betätigungsorganes 18. Insbesondere können dadurch ausklingende bzw. in der Geschwindigkeit allmählich abnehmende Verstellbewegungen in Bezug auf die anzusteuernde Maschinenkomponente bewirkt werden. Auch diese Bedienfunktion ist für eine Bedienperson 7 besonders intuitiv und zugleich gut kontrollierbar bzw. einfach ausführbar.

Entsprechend einer Ausführungsform, wie sie in Fig. 4 veranschaulicht ist, kann das Betätigungsorgan 18 mit einem gesteuert veränderlichen Drehwiderstand-Generierungsmittel 21 in mechanischer Wechselwirkung bzw. Bewegungskopplung stehen. Diese Bewegungskopplung ist dabei derart, dass das Drehwiderstand-Generierungsmittel 21 in Abhängigkeit einer Ansteuerung durch die Auswerte- und Steuervorrichtung 20 einen aktivier- und deaktivierbaren Verdrehwiderstand bzw. eine Freigabe und Blockade des Betätigungsorganes 18, oder einen gesteuert veränderlichen, insbesondere einen kontinuierlich oder diskontinuierlich veränderbaren Drehwiderstand gegenüber dem Betätigungsorgan 18 aufbauen kann. Dieser Drehwiderstand kann dabei auch als Halte- bzw. Bremsmoment verstanden werden, welcher via das Drehwiderstand-Generierungsmittel 21 erzeugt werden kann und dabei auf das Betätigungsorgan 18 bzw. auf interne Komponenten des Drehsteller-Bedienelementes 17 übertragen wird. Insbesondere wirkt das Drehwiderstand-Generierungsmittel 21 gesteuert bzw. steuerbar auf die Drehbeweglichkeit des Betätigungsorgans 18 ein.

Das Drehwiderstand-Generierungsmittel 21 kann dabei durch beliebige aus dem Stand der Technik bekannte Prinzipien bzw. Systeme verwirklicht sein. Zweckmäßig ist es, wenn das Drehwiderstand-Generierungsmittel 21 Stellelemente umfasst, welche auf dem magnetorheologischen Prinzip basieren, insbesondere magnetorheologische Flüssigkeiten umfassen. Gleichsam ist es möglich, dass das Drehwiderstand-Generierungsmittel 21 mechanische bzw. elektromechanisch steuerbare bzw. aktivierbare Brems- bzw. Blockiermittel umfasst.

Entsprechend einer zweckmäßigen Ausführungsform kann vorgesehen sein, dass das Drehwiderstand-Generierungsmittel 21 von der Auswerte- und Steuervorrichtung 20 derart ansteuerbar ist bzw. angesteuert wird, dass in Zusammenhang mit einer von einer Bedienperson 7 vorgesehenen Erhöhung der Bewegungsgeschwindigkeit einer anzusteuernden bzw. angesteuerten Maschinenkomponente ein Drehwiderstand bzw. der entsprechende Betätigungswiderstand des Betätigungsorganes 18 erhöht wird. Dadurch ist für eine Bedienperson intuitiv erkennbar, dass seine Steuerungs- bzw. Bewegungsbefehle in Geschwindigkeitsbereiche vordringen, welche relativ hoch sind. Diese haptische Rückmeldung ist insbesondere dann von besonderem Vorteil, wenn die Maschine 3 bzw. Maschinenkomponente eine parallel zur Blickrichtung der Bedienperson verlaufende Bewegung ausführt, insbesondere in Richtung weg von der Bedienperson 7 verläuft, oder in Richtung zur Bedienperson 7 verläuft. Vor allem bei derartigen Bewegungsrichtungen ist nämlich eine Einschätzung der tatsächlichen Geschwindigkeit der Maschinenkomponente durch die Bedienperson 7 relativ schwierig vorzunehmen.

Gemäß einer weiteren praktikablen Ausführungsform kann vorgesehen sein, dass das Drehwiderstand-Generierungsmittel 21 von der Auswerte- und Steuervorrichtung 20 derart ansteuerbar ist bzw. angesteuert wird, dass beim Erreichen der Ausgangsposition 22 des Betätigungsorganes 18, welche Ausgangsposition 22 fix vordefiniert sein kann, aber auch durch die ursprüngliche bzw. letztmalige Ausgangs- bzw. Ruhelage des endlos verdreh- bzw. rotierbaren Betätigungsorganes 18 definiert sein kann, die weitere Verdrehbarkeit des Betätigungsorganes 18 zumindest vorübergehend blockiert oder gehemmt wird. Insbesondere kann es zweckmäßig sein, in Zusammenhang mit einer Rückdrehung des Betätigungsorganes 18 in die Ausgangsposition 22 bzw. in die letztmalige Ausgangs- bzw. Ruhelage eine weitere Verdrehbarkeit des Betätigungsorganes 18 über diese Ausgangsposition 22 hinaus bzw. über die letztmalige Ausgangs- bzw. Ruhelage hinaus, entweder für eine vordefinierte Zeitspanne, oder während dem Auftreten bzw. Einwirken eines Betätigungsmomentes gegenüber dem Betätigungsorgan 18 zu blockieren, insbesondere zu sperren, oder alternativ zu hemmen. Dadurch wird einer Bedienperson 7 in effektiver und vorteilhafter Art und Weise das Erreichen der Ausgangsposition 22 bzw. der letztmaligen Ausgangs- bzw. Ruhelage, welche durch die ursprüngliche Ruhelage definiert sein kann, praktikabel signalisiert. Insbesondere kann dadurch ein unerwünschtes "Überdrehen" des Betätigungsorganes 18 im Zuge einer Rückdrehbewegung des Betätigungsorganes 18 zur Einleitung eines kontrollierten Bewegungsstopps hintan gehalten werden.

Das Drehwiderstand-Generierungsmittel 21 kann auch zur Erzeugung von Raststufen eingesetzt werden, welche der Bedienperson 7 den mit dem Betätigungsorgan 18 jeweils zurückgelegten Drehwinkel zumindest haptisch, oder sogar haptisch und akustisch, vermitteln können. Die Anzahl an leicht überwindbaren jedoch fühlbaren Raststufen kann dabei fix vordefiniert sein, oder in Abhängigkeit der jeweiligen Bewegungsfunktion automatisch angepasst sein. Je nach Erfordernis können dabei grobe oder feine Rastabstufungen vorgesehen sein, wobei bis zu 100 gleichmäßig verteilte Raststufen pro ganzer Umdrehung des Betätigungsorganes 18 von einer Bedienperson 7 ohne Mühe taktil wahrgenommen werden können.

Wie den schematischen Darstellungen gemäß den Fig. 1 und 3 entnehmbar ist, kann das Tastschaltelement 19 zur Einleitung des ersten Interaktionsmodus M1 baulich eigenständig ausgeführt und separat vom Drehsteller-Bedienelement 17 angeordnet sein. Entsprechend einer zweckmäßigen Ausführung, wie sie in Fig. 4 schematisch veranschaulicht wurde, kann das Tastschaltelement 19 auch als integraler bzw. integrierter Bestandteil des Drehsteller-Bedienelementes 17 ausgeführt sein. Insbesondere bilden dabei das Drehsteller-Bedienelement 17 und das Tastschaltelement 19 eine integrale Baueinheit.

Entsprechend einer praktikablen Ausführung kann dabei auch vorgesehen sein, dass das Tastschaltelement 19 unmittelbar auf dem Betätigungsorgan 18 des Drehsteller-Bedienelementes 17 ausgeführt ist bzw. vom Betätigungsorgan 18 getragen wird. Demzufolge wird das Tastschaltelement 19 mitbewegt bzw. bei einer Drehbewegung des Betätigungsorgans 18 mitgedreht bzw. mitrotiert. Entsprechend einer möglichen Weiterbildung ist dabei vorgesehen, dass das Tastschaltelement 19 exzentrisch zur Drehachse 23 des Betätigungsorganes 18 angeordnet ist. Das heißt, dass hierbei das Tastschaltelement 19 außermittig in Bezug auf das in Draufsicht im Wesentlichen kreisrunde, mehreckige oder elliptische Betätigungsorgan 18 positioniert ist.

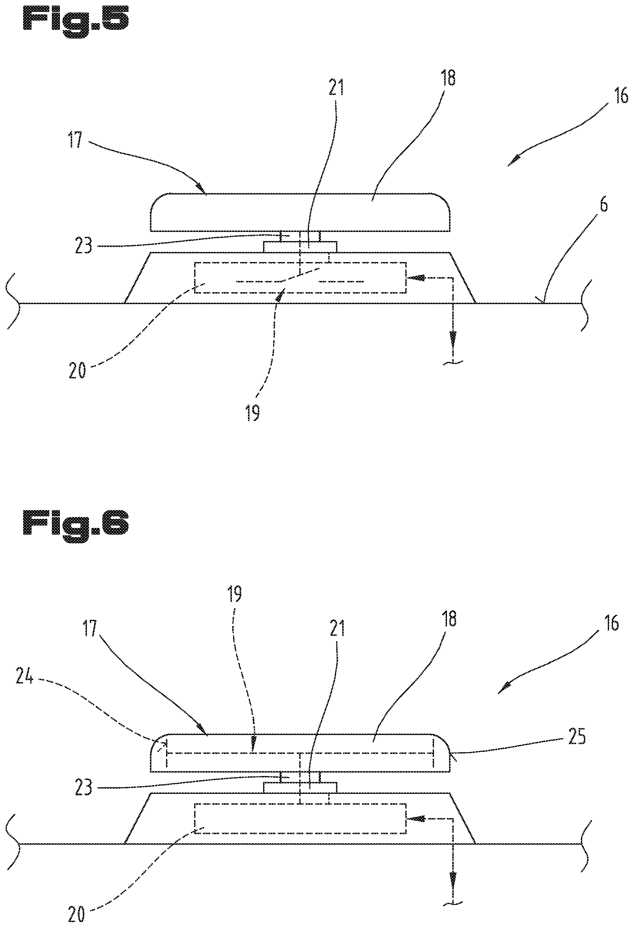

Gemäß einer Ausführungsform, wie sie in Fig. 5 schematisch veranschaulicht wurde, kann das Drehsteller-Bedienelement 17 in Bezug auf die Benutzeroberfläche der Mensch-Maschinenschnittstelle 6 zumindest teilweise erhaben ausgeführt sein. Dadurch ist eine ergonomische Bedienung des rotatorisch verdrehbaren Betätigungsorgans 18 ermöglicht. Das Betätigungsorgan 18 kann scheiben- bzw. radförmig ausgeführt sein, wobei die Drehachse 23 des Betätigungsorgan 18 senkrecht oder im Wesentlichen senkrecht zur Benutzeroberfläche der Mensch-Maschine-Schnittstelle 6 verläuft.

Ferner kann vorgesehen sein, dass das Tastschaltelement 19 das Drehsteller-Bedienelement 17 bzw. dessen Betätigungsorgan 18 trägt bzw. aufnimmt. Durch manuelle Verstellung des Drehsteller-Bedienelementes 17 respektive des Betätigungsorganes 18 in axialer Richtung bezüglich der Drehachse 23 des Betätigungsorganes 18 kann das Tastschaltelement 19 aktiviert und deaktiviert werden. Insbesondere kann dabei eine Art von "Huke-Pack" - Anordnung ausgeführt sein, welche eine kombinatorische Drück- und Drehbetätigung des Drehsteller-Bedienelementes 17 und des Tastschaltelementes 19 ermöglicht. Insbesondere sitzt dabei das Betätigungsorgan 18 oder das gesamte Drehsteller-Bedienelement 17 gewissermaßen auf dem Tastschaltelement 19.

Gemäß einer Ausführungsform, wie sie in Figur 6 schematisch dargestellt wurde, kann das Tastschaltelement 19 auch als berührungslos aktivierbarer Sensor 24, insbesondere als kapazitiver Sensor, als Drucksensor, oder als Helligkeitssensor ausgeführt sein. Auch dadurch ist eine Tastschaltfunktion umsetzbar. Insbesondere ist erfassbar, ob eine Bedienperson 7 das sensorisch ausgeführte Tastschaltelement 19 aktiviert hat, oder ob Inaktivität vorliegt.

Zweckmäßig kann es auch sein, den als Tastschaltelement 19 fungierenden berührungssensitiven Sensor 24 als berührungssensitiven Abschnitt 25 des Betätigungsorganes 18 auszuführen. Dieser berührungssensitive Abschnitt 25 kann dabei durch den Mantelabschnitt eines rad- bzw. scheibenförmigen Betätigungsorganes 18 definiert sein, während die obere Stirnseite des Betätigungsorganes 18 nicht berührungssensitiv sein kann und somit keine Schaltfunktion aufweist. Durch wechselseitiges Ergreifen bzw. Bedienen des Betätigungsorganes 18 an dessen Oberseite bzw. an dessen umfangsseitigen Abschnitt 25 kann somit eine wahlweise Aktivierung und Deaktivierung des sensorischen Tastschaltelementes 19 erzielt werden. Dies ist in einfacher Art und Weise durch Umgreifen gegenüber dem Betätigungsorgan 18 erzielbar. In Verbindung mit einem entsprechenden Drehsteller-Bedienelement 17 kann ein hoher Bedienungskomfort erreicht werden.

Die zuvor angegebenen technischen Maßnahmen bzw. Verfahrensabläufe sind durch eine Kombination aus hardwaretechnischen und softwaretechnischen Komponenten umsetzbar. Das Schutzbegehren der Anmelderin richtet sich daher sowohl auf Vorrichtungsansprüche, als auch auf entsprechende Verfahrensansprüche.

Der Schutzbereich ist durch die Ansprüche bestimmt. Die Beschreibung und die Zeichnungen sind jedoch zur Auslegung der Ansprüche heranzuziehen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Steuerungssystem
- 2, 2': Steuervorrichtung
- 3: Maschine
- 4: Industrieroboter
- 5: Leitrechner
- 6: Mensch-Maschine-Schnittstelle
- 7: Bedienperson
- 8: Handbediengerät
- 9: Bedienpanel
- 10: Eingabevorrichtung
- 11: berührungssensitiver Bildschirm
- 12: Eingabetaste
- 13: Bewegungsantrieb
- 14: Motor
- 15: Magnetventil
- 16: Bedienelement
- 17: Drehsteller-Bedienelement
- 18: Betätigungsorgan
- 19: Tastschaltelement
- 20: Auswerte- und Steuervorrichtung
- 21: Drehwiderstand-Generierungsmittel
- 22: Ausgangsposition
- 23: Drehachse
- 24: Sensor (berührungslos)
- 25: Abschnitt (berührungssensitiv)

## Patentansprüche

1. Steuervorrichtung (2, 2') für industrielle Maschinen mit gesteuerten Bewegungsantrieben (13) für Maschinenkomponenten, umfassend
eine Mensch-Maschine-Schnittstelle (6) mit wenigstens einem Bedienelement (16) zur manuellen Beeinflussung oder Vorgabe von Verstellbewegungen von zumindest einer der Maschinenkomponenten, wobei
zumindest ein Bedienelement (16) als Drehsteller-Bedienelement (17) mit einem endlos verdrehbaren Betätigungsorgan (18) ausgeführt ist, wobei
das Drehsteller-Bedienelement (17) mit wenigstens einem Tastschaltelement (19) in funktionaler Wechselwirkung steht, wobei
das Drehsteller-Bedienelement (17) und das Tastschaltelement (19) mit einer elektronischen Auswerte- und Steuervorrichtung (20) verbunden sind, welche zumindest zur Bereitstellung eines ersten und eines zweiten Interaktionsmodus (M1, M2) eingerichtet ist, wobei
der erste Interaktionsmodus (M1) zur Vorgabe einer von einer Bedienperson gewünschten Bewegungsgeschwindigkeit und gewünschten Bewegungsrichtung einer anzusteuernden Maschinenkomponente vorgesehen ist, in welchem ersten Interaktionsmodus (M1) das Tastschaltelement (19) zu betätigen oder zu aktivieren ist und gleichzeitig oder zusätzlich das Betätigungsorgan (18) des Drehsteller-Bedienelementes (17) um einen der gewünschten Bewegungsgeschwindigkeit entsprechenden Drehwinkel in die jeweilige Drehrichtung zu verstellen ist, wobei durch das Ausmaß des Drehwinkels die Bewegungsgeschwindigkeit und durch die Verdrehrichtung die Bewegungsrichtung einer anzusteuernden Maschinenkomponente definiert sind, und wobei
im zweiten Interaktionsmodus (M2) eine Drehbetätigung des Betätigungsorganes (18) des Drehsteller-Bedienelementes (17) ohne einer gleichzeitigen Betätigung des Tastschaltelementes (19) vorgesehen ist, wobei anstatt einer Vorgabe einer Bewegungsgeschwindigkeit eine Positionsänderung einer anzusteuernden Maschinenkomponente proportional zum Ausmaß der Drehbetätigung, insbesondere in Abhängigkeit des fortlaufend zurückgelegten Drehwinkels des Betätigungsorganes (18) erfolgt,
**dadurch gekennzeichnet, dass**
das Betätigungsorgan (18) mit einem gesteuert veränderlichen Drehwiderstand-Generierungsmittel (21) in mechanischer Wechselwirkung steht, und dass
das Drehwiderstand-Generierungsmittel (21) von der Auswerte- und Steuervorrichtung (20) derart ansteuerbar ist, dass beim Erreichen einer letztmaligen Ruhestellung des Betätigungsorganes (18) infolge einer Rückdrehung des Betätigungsorganes (18) durch eine Bedienperson, eine Verdrehbarkeit des Betätigungsorganes (18) über diese letztmalige Ruhestellung hinaus für eine vordefinierte Zeitspanne, oder während dem Einwirken eines Betätigungsmomentes gegenüber dem Betätigungsorgan (18), blockiert oder gehemmt wird, sodass einer Bedienperson das Erreichen der letztmaligen Ruhestellung des Betätigungsorgans (18) haptisch signalisiert ist.

2. Steuervorrichtung nach Anspruch 1, **dadurch gekennzeichnet, dass** ein Steuerungsablauf derart erfolgt, dass infolge eines Loslassens oder einer Deaktivierung des Tastschaltelementes (19) während der Vorgabe einer Bewegungsgeschwindigkeit gemäß dem ersten Interaktionsmodus (M1) eine Verfahrbewegung der anzusteuernden Maschinenkomponente abgebrochen wird.

3. Steuervorrichtung nach Anspruch 1 oder 2, **dadurch gekennzeichnet, dass** ein Steuerungsablauf derart erfolgt, dass im Zuge der Vorgabe einer Bewegungsgeschwindigkeit gemäß dem ersten Interaktionsmodus (M1) und einer dabei von einer Bedienperson vorgenommenen Drehbetätigung des Betätigungsorganes (18) zurück in eine Ausgangsposition (22) des Betätigungsorganes (18), oder zurück in eine letztmaligen Ruhelage des Betätigungsorganes (18), die Bewegungsgeschwindigkeit der anzusteuernden Maschinenkomponente im Ausmaß der rückstellenden Drehbetätigung reduziert wird und die Verstellbewegung der anzusteuernden Maschinenkomponente beim Erreichen der Ausgangsposition (22) des Betätigungsorganes (18) respektive beim Erreichen der letztmaligen Ruhelage des Betätigungsorganes (18) gestoppt wird.

4. Steuervorrichtung nach Anspruch 1, **dadurch gekennzeichnet, dass** das Drehwiderstand-Generierungsmittel (21) von der Auswerte- und Steuervorrichtung (20) derart ansteuerbar ist, dass in Zusammenhang mit einer von einer Bedienperson vorgesehenen Erhöhung der Bewegungsgeschwindigkeit einer anzusteuernden Maschinenkomponente ein Drehwiderstand des Betätigungsorganes (18) erhöht wird.

5. Steuervorrichtung nach einem der vorhergehenden Ansprüche, **dadurch gekennzeichnet, dass** das Tastschaltelement (19) baulich eigenständig ausgeführt und separat vom Drehsteller-Bedienelement (17) angeordnet ist.

6. Steuervorrichtung nach einem der Ansprüche 1 bis 4, **dadurch gekennzeichnet, dass** das Tastschaltelement (19) als integrierter Bestandteil des Drehsteller-Bedienelementes (17) ausgeführt ist.

7. Steuervorrichtung nach Anspruch 6, **dadurch gekennzeichnet, dass** das Tastschaltelement (19) auf dem Betätigungsorgan (18) des Drehsteller-Bedienelementes (17) ausgeführt ist.

8. Steuervorrichtung nach Anspruch 7, **dadurch gekennzeichnet, dass** das Tastschaltelement (19) exzentrisch zu einer Drehachse (23) des Betätigungsorganes (18) angeordnet ist.

9. Steuervorrichtung nach einem der vorhergehenden Ansprüche, **dadurch gekennzeichnet, dass** das Tastschaltelement (19) das Drehsteller-Bedienelement (17) trägt oder aufnimmt, und dass durch manuelle Verstellung des Drehsteller-Bedienelementes (17) oder von dessen Betätigungsorgan (18) in axialer Richtung zu einer Drehachse (23) des Betätigungsorganes (18) das Tastschaltelement (19) aktivier- und deaktivierbar ist.

10. Steuervorrichtung nach einem der vorhergehenden Ansprüche, **dadurch gekennzeichnet, dass** das Tastschaltelement (19) als berührungslos aktivierbarer Sensor (24), insbesondere als kapazitiver Sensor oder als Helligkeitssensor ausgeführt ist, oder als Drucksensor ausgebildet ist.

11. Steuervorrichtung nach einem der vorhergehenden Ansprüche, **dadurch gekennzeichnet, dass** das Tastschaltelement (19) als berührungssensitiver Abschnitt (25) des Betätigungsorganes (18) ausgeführt ist.

12. Verfahren zum Betreiben einer elektronischen Steuervorrichtung (2, 2') für industrielle Maschinen (3) mit gesteuerten Bewegungsantrieben (13) für Maschinenkomponenten, wobei
eine Mensch-Maschine-Schnittstelle (6) mit wenigstens einem Bedienelement (16) zur manuellen Beeinflussung oder Vorgabe von Verstellbewegungen von zumindest einer der Maschinenkomponenten vorgesehen ist, wobei
zumindest ein Bedienelement (16) als Drehsteller-Bedienelement (17) mit einem endlos verdrehbaren Betätigungsorgan (18) ausgeführt ist, wobei
das Drehsteller-Bedienelement (17) mit wenigstens einem Tastschaltelement (19) in funktionaler Wechselwirkung steht, wobei
das Drehsteller-Bedienelement (17) und das Tastschaltelement (19) mit einer elektronischen Auswerte- und Steuervorrichtung (20) verbunden sind, welche zumindest zur Bereitstellung eines ersten und eines zweiten Interaktionsmodus (M1, M2) eingerichtet ist, wobei
der erste Interaktionsmodus (M1) zur Vorgabe einer von einer Bedienperson gewünschten Bewegungsgeschwindigkeit und gewünschten Bewegungsrichtung einer anzusteuernden Maschinenkomponente vorgesehen ist, in welchem ersten Interaktionsmodus (M1) das Tastschaltelement (19) zu betätigen oder zu aktivieren ist und gleichzeitig oder zusätzlich das Betätigungsorgan (18) des Drehsteller-Bedienelementes (17) um einen der gewünschten Bewegungsgeschwindigkeit entsprechenden Drehwinkel in die jeweilige Drehrichtung zu verstellen ist, wobei durch das Ausmaß des Drehwinkels die Bewegungsgeschwindigkeit und durch die Verdrehrichtung die Bewegungsrichtung einer anzusteuernden Maschinenkomponente definiert werden, und wobei
im zweiten Interaktionsmodus (M2) eine Drehbetätigung des Betätigungsorganes (18) des Drehsteller-Bedienelementes (17) ohne einer gleichzeitigen Betätigung des Tastschaltelementes (19) vorgesehen ist, wobei anstatt einer Vorgabe einer Bewegungsgeschwindigkeit eine Positionsänderung einer anzusteuernden Maschinenkomponente proportional zum Ausmaß der Drehbetätigung, insbesondere in Abhängigkeit des fortlaufend zurückgelegten Drehwinkels des Betätigungsorganes (18) ausgeführt wird,
**dadurch gekennzeichnet, dass**
das Betätigungsorgan (18) mit einem gesteuert veränderlichen Drehwiderstand-Generierungsmittel (21) in mechanischer Wechselwirkung steht, und dass
das Drehwiderstand-Generierungsmittel (21) von der Auswerte- und Steuervorrichtung (20) derart angesteuert wird, dass beim Erreichen einer letztmaligen Ruhestellung des Betätigungsorganes (18) infolge einer Rückdrehung des Betätigungsorganes (18) durch eine Bedienperson, eine Verdrehbarkeit des Betätigungsorganes (18) über diese letztmalige Ruhestellung hinaus für eine vordefinierte Zeitspanne, oder während dem Einwirken eines Betätigungsmomentes gegenüber dem Betätigungsorgan (18), blockiert oder gehemmt wird, sodass einer Bedienperson das Erreichen der letztmaligen Ruhestellung des Betätigungsorgans (18) haptisch signalisiert wird.

## Claims

1. A control device (2, 2') for industrial machines having controlled motion drives (13) for machine components, comprising
a human-machine interface (6) with at least one operating element (16) for manually influencing or predetermining adjustment movements of at least one of the machine components, wherein
at least one operating element (16) is configured as a rotary adjuster operating element (17) with a continuously rotatable actuation member (18), wherein
the rotary adjuster operating element (17) is in functional interaction with at least one momentary switch element (19), wherein
the rotary adjuster operating element (17) and the momentary switch element (19) are connected to an electronic evaluation and control device (20), which is equipped at least for provision of a first and a second interaction mode (M1, M2), wherein
the first interaction mode (M1) is provided for specifying a movement speed desired by an operator and a desired direction of movement of a machine component to be controlled, in which first interaction mode (M1) the momentary switch element (19) is to be actuated or to be activated, and at the same time or in addition, the actuating member (18) of the rotary adjuster operating element (17) is to be adjusted in the relevant direction of rotation by an angle of rotation corresponding to the desired movement speed, wherein the movement speed is defined by the size of the angle of rotation and the direction of movement of a machine component to be controlled is defined by the direction of rotation, and wherein
in the second interaction mode (M2), a rotary actuation of the actuating member (18) of the rotary adjuster operating element (17) without a simultaneous actuation of the momentary switch element (19) is provided, wherein, instead of a specification of a movement speed, a position change of a machine component to be controlled takes place that is proportional to the size of the rotary actuation, in particular as a function of the continuously traveled angle of rotation of the actuating member (18),
**characterized in that**
the actuation member (18) mechanically interacts with a rotational resistance-generating means (21) that can be changed in controlled manner, and that the rotational resistance-generating means (21) can be controlled by the evaluation and control device (20) such that when reaching a last rest position of the actuation member (18) as a result of the actuation member (18) being rotated back by an operator, a rotatability of the actuation member (18) beyond said last rest position is blocked or impeded for a predefined time period or while an actuation momentum acts on the actuation member (18), so that the reaching of the last rest position of the actuation member (18) is haptically signaled to an operator.

2. The control system according to claim 1, **characterized in that** a control sequence takes place in such a manner that a traversing movement of the machine component to be controlled is terminated as a result of a release or a deactivation of the momentary switch element (19) during the specification of a movement speed according to the first interaction mode (M1).

3. The control system according to claim 1 or 2, **characterized in that** a control sequence takes place in such a manner that, during the course of the specification of a movement speed according to the first interaction mode (M1) and a rotary actuation of the actuating member (18) back into an initial position (22) of the actuating member (18) or back into a last rest position of the actuating member (18), undertaken by an operator in this context, the movement speed of the machine component to be controlled is reduced in the extent of the returning rotary actuation, and the adjustment movement of the machine component to be controlled is stopped upon reaching the initial position (22) of the actuating member (18), or respectively upon reaching the last rest position of the actuating member (18).

4. The control system according to claim 1, **characterized in that** the rotational resistance-generating means (21) is controllable by the evaluation and control device (20) in such a manner that a rotational resistance of the actuating member (18) is increased in connection with an increase provided by an operator in the movement speed of a machine component to be controlled.

5. The control system according to one of the preceding claims, **characterized in that** the momentary switch element (19) is designed to be structurally separate and is arranged separate from the rotary adjuster operating element (17).

6. The control system according to one of claims 1 to 4, **characterized in that** the momentary switch element (19) is designed as an integrated component of the rotary adjuster operating element (17).

7. The control system according to claim 6, **characterized in that** the momentary switch element (19) is implemented on the actuating member (18) of the rotary adjuster operating element (17).

8. The control system according to claim 7, **characterized in that** the momentary switch element (19) is arranged so as to be eccentric to an axis of rotation (23) of the actuating member (18).

9. The control system according to one of the preceding claims, **characterized in that** the momentary switch element (19) carries or accommodates the rotary adjuster operating element (17), and that the momentary switch element (19) can be activated and deactivated through manual adjustment of the rotary adjuster operating element (17) or of its actuating member (18) in the axial direction with respect to an axis of rotation (23) of the actuating member (18).

10. The control system according to one of the preceding claims, **characterized in that** the momentary switch element (19) is designed as a contactlessly activatable sensor (24), in particular as a capacitive sensor or as a brightness sensor, or is implemented as a pressure sensor.

11. The control system according to one of the preceding claims, **characterized in that** the momentary switch element (19) is designed as a touch-sensitive section (25) of the actuating member (18).

12. A method for operating an electronic control device (2, 2') for industrial machines (3) having controlled motion drives (13) for machine components, wherein
a human-machine interface (6) with at least one operating element (16) for manually influencing or predetermining adjustment movements of at least one of the machine components is provided, wherein
at least one operating element (16) is configured as a rotary adjuster operating element (17) with a continuously rotatable actuation member (18), wherein
the rotary adjuster operating element (17) is in functional interaction with at least one momentary switch element (19), wherein
the rotary adjuster operating element (17) and the momentary switch element (19) are connected to an electronic evaluation and control device (20), which is equipped at least for provision of a first and a second interaction mode (M1, M2), wherein
the first interaction mode (M1) is provided for specifying a movement speed desired by an operator and a desired direction of movement of a machine component to be controlled, in which first interaction mode (M1) the momentary switch element (19) is to be actuated or to be activated, and at the same time or in addition, the actuating member (18) of the rotary adjuster operating element (17) is to be adjusted in the relevant direction of rotation by an angle of rotation corresponding to the desired movement speed, wherein the movement speed is defined by the size of the angle of rotation and the direction of movement of a machine component to be controlled is defined by the direction of rotation, and wherein
in the second interaction mode (M2), a rotary actuation of the actuating member (18) of the rotary adjuster operating element (17) without a simultaneous actuation of the momentary switch element (19) is provided, wherein, instead of a specification of a movement speed, a position change of a machine component to be controlled is performed that is proportional to the size of the rotary actuation, in particular as a function of the continuously traveled angle of rotation of the actuating member (18),
**characterized in that**
the actuation member (18) mechanically interacts with a rotational resistance-generating means (21) that can be changed in controlled manner, and that the rotational resistance-generating means (21) is controlled by the evaluation and control device (20) such that when reaching a last rest position of the actuation member (18) as a result of the actuation member (18) being rotated back by an operator, a rotatability of the actuation member (18) beyond said last rest position is blocked or impeded for a predefined time period or while an actuation momentum acts on the actuation member (18), so that the reaching of the last rest position of the actuation member (18) is haptically signaled to an operator.

## Revendications

1. Dispositif de commande (2, 2') pour des machines industrielles avec des entraînements de mouvements contrôlés (13) pour des composants de machines, comprenant
une interface homme-machine (6) avec au moins un élément de commande (16) pour le contrôle manuel ou la spécification de mouvements de réglage d'au moins un des composants de la machine, dans lequel
au moins un élément de commande (16) est conçu comme un élément de commande à actionneur rotatif (17) avec un organe d'actionnement rotatif sans fin (18), dans lequel l'élément de commande à actionneur rotatif (17) est en interaction fonctionnelle avec au moins un élément à bouton-poussoir (19),
l'élément de commande à actionneur rotatif (17) et l'élément à bouton-poussoir (19) sont reliés avec un dispositif d'analyse et de commande (20) qui est conçu au moins pour la mise à disposition d'un premier et d'un deuxième mode d'interaction (M1, M2), dans lequel
le premier mode d'interaction (M1) est prévu pour la spécification, par un opérateur, d'une vitesse de mouvement souhaitée et d'une direction de mouvement souhaitée d'un composant de machine à contrôler, l'élément à bouton-poussoir (19) devant, dans ce premier mode d'interaction (M1), être actionné ou activé et simultanément ou en outre l'organe d'actionnement (18) de l'élément de commande à actionneur rotatif (17) devant être déplacé dans le sens de rotation d'un angle de rotation correspondant à la vitesse de mouvement souhaitée, dans lequel la valeur de l'angle de rotation définit la vitesse de mouvement et le sens de rotation définit le sens du mouvement d'un composant de machine à contrôler et dans lequel
dans le deuxième mode d'interaction (M2), un actionnement rotatif de l'organe d'actionnement (18) de l'élément de commande à actionneur rotatif (17) est prévu sans actionnement simultané de l'élément à bouton-poussoir (19), dans lequel, au lieu d'une spécification d'une vitesse de mouvement, une modification de position d'un composant de machine à contrôler a lieu proportionnellement à la valeur de l'actionnement rotatif, plus particulièrement en fonction de l'angle de rotation parcouru de manière continue par l'organe d'actionnement (18),
**caractérisé en ce que**
l'organe d'actionnement (18) est en interaction mécanique avec un moyen de génération de résistance à la rotation (21) variable de manière contrôlée et **en ce que** le moyen de génération de résistance à la rotation (21) peut être contrôlé par le dispositif d'analyse et de commande (20) de façon à ce que, lorsqu'une position de repos de l'organe d'actionnement (18) est atteinte pour la dernière fois à la suite d'une rotation de retour de l'organe d'actionnement (18) par un opérateur, une possibilité de rotation de l'organe d'actionnement (18) au-delà de cette dernière position de repos est bloquée ou inhibée pendant une période prédéfinie ou pendant l'action d'un couple d'actionnement par rapport à l'organe d'actionnement (18), de façon à ce que le fait que la dernière position de repos de l'organe d'actionnement (18) est atteinte soit signalée de manière haptique.

2. Dispositif de commande selon la revendication 1, **caractérisé en ce qu'**un processus de commande a lieu de façon à ce que, suite à un relâchement ou à une désactivation de l'élément à bouton-poussoir (19) pendant la spécification d'une vitesse de mouvement selon le premier mode d'interaction (M1), un mouvement de déplacement du composant de machine à contrôler est interrompu.

3. Dispositif de commande selon la revendication 1 ou 2, **caractérisé en ce qu'**un processus de commande a lieu de façon à ce que, au cours de la spécification d'une vitesse de mouvement selon le premier mode d'interaction (M1) et d'un actionnement rotatif, effectué par un opérateur, de l'organe d'actionnement (18) de retour vers une position initiale (22) de l'organe d'actionnement (18) ou de retour vers une dernière position de repos de l'organe d'actionnement (18), la vitesse de mouvement du composant de machine à contrôler est réduite de l'actionnement rotatif de rappel et le mouvement de déplacement du composant de machine à contrôler est arrêté lorsque la position initiale (22) de l'organe d'actionnement (18) est atteinte, respectivement lorsque la dernière position de repos de l'organe d'actionnement (18) est atteinte.

4. Dispositif de commande selon la revendication 1, **caractérisé en ce que** le moyen de génération de résistance à la rotation (21) peut être contrôlé par le dispositif d'analyse et de commande (20) de façon à ce que, en lien avec une augmentation, prévue par un opérateur, de la vitesse de mouvement d'un composant de machine à contrôler, une résistance à la rotation de l'organe d'actionnement (18) soit augmentée.

5. Dispositif de commande selon l'une des revendications précédentes, **caractérisé en ce que** l'élément à bouton-poussoir (19) est conçu de manière autonome et est disposé séparément de l'élément de commande à actionneur rotatif (17).

6. Dispositif de commande selon l'une des revendications 1 à 4, **caractérisé en ce que** l'élément à bouton-poussoir (19) fait partie intégrante de l'élément de commande à actionneur rotatif (17).

7. Dispositif de commande selon la revendication 6, **caractérisé en ce que** l'élément à bouton-poussoir (19) est réalisé sur l'organe d'actionnement (18) de l'élément de commande à actionneur rotatif (17).

8. Dispositif de commande selon la revendication 7, **caractérisé en ce que** l'élément à bouton-poussoir (19) est disposé de manière excentrée par rapport à un axe de rotation (23) de l'organe d'actionnement (18).

9. Dispositif de commande selon l'une des revendications précédentes, **caractérisé en ce que** l'élément à bouton-poussoir (19) supporte ou loge l'élément de commande à actionneur rotatif (17) et **en ce que** l'élément à bouton-poussoir (19) peut être activé et désactivé par un déplacement manuel de l'élément de commande à actionneur rotatif (17) ou de son organe d'actionnement (18) dans la direction axiale vers un axe de rotation (23) de l'organe d'actionnement (18).

10. Dispositif de commande selon l'une des revendications précédentes, **caractérisé en ce que** l'élément à bouton-poussoir (19) est conçu comme un capteur activable sans contact (24), plus particulièrement comme un capteur capacitif ou un capteur de luminosité ou comme un capteur de pression.

11. Dispositif de commande selon l'une des revendications précédentes, **caractérisé en ce que** l'élément à bouton-poussoir (19) est conçu comme une portion sensible au contact (25) de l'organe d'actionnement (18).

12. Procédé de fonctionnement d'un dispositif de commande électronique (2, 2') pour des machines industrielles (3) avec des entraînements de mouvement contrôlés (13) pour des composants de machines, dans lequel
une interface homme-machine (6), avec au moins un élément de commande (16) pour le contrôle manuel ou la spécification de mouvements de déplacement d'au moins un des composants de la machine, dans lequel
au moins un élément de commande (16) est conçu comme un élément de commande à actionneur rotatif (17) avec un organe d'actionnement rotatif sans fin (18), dans lequel l'élément de commande à actionneur rotatif (17) est en interaction fonctionnelle avec au moins un élément à bouton-poussoir (19), dans lequel
l'élément de commande à actionneur rotatif (17) et l'élément à bouton-poussoir (19) sont reliés avec un dispositif d'analyse et de commande électronique (20) qui est conçu au moins pour la mise à disposition d'un premier et d'un deuxième mode d'interaction (M1, M2), dans lequel
le premier mode d'interaction (M1) est prévu pour la spécification, par un opérateur, d'une vitesse de mouvement souhaitée et d'une direction de mouvement souhaitée d'un composant de machine à contrôler, l'élément à bouton-poussoir (19) devant, dans ce premier mode d'interaction (M1), être actionné ou activé et simultanément ou en outre l'organe d'actionnement (18) de l'élément de commande à actionneur rotatif (17) devant être déplacé dans le sens de rotation d'un angle de rotation correspondant à la vitesse de mouvement souhaitée, dans lequel la valeur de l'angle de rotation définit la vitesse de mouvement et le sens de rotation définit le sens du mouvement d'un composant de machine à contrôler et dans lequel
dans le deuxième mode d'interaction (M2), un actionnement rotatif de l'organe d'actionnement (18) de l'élément de commande à actionneur rotatif (17) est prévu sans actionnement simultané de l'élément à bouton-poussoir (19), dans lequel, au lieu d'une spécification d'une vitesse de mouvement, une modification de position d'un composant de machine à contrôler a lieu proportionnellement à la valeur de l'actionnement rotatif, plus particulièrement en fonction de l'angle de rotation parcouru de manière continue par l'organe d'actionnement (18),
**caractérisé en ce que**
l'organe d'actionnement (18) est en interaction mécanique avec un moyen de génération de résistance à la rotation (21) variable de manière contrôlée et **en ce que** le moyen de génération de résistance à la rotation (21) peut être contrôlé par le dispositif d'analyse et de commande (20) de façon à ce que, lorsqu'une position de repos de l'organe d'actionnement (18) est atteinte pour la dernière fois à la suite d'une rotation de retour de l'organe d'actionnement (18) par un opérateur, une possibilité de rotation de l'organe d'actionnement (18) au-delà de cette dernière position de repos est bloquée ou inhibée pendant une période prédéfinie ou pendant l'action d'un couple d'actionnement par rapport à l'organe d'actionnement (18), de façon à ce que le fait que la dernière position de repos de l'organe d'actionnement (18) est atteinte soit signalée de manière haptique.
